# EUROPEAN PATENT APPLICATION

(11) **EP 2 333 443 A2**
(43) Date of publication of application: **15.06.2011**
(21) Application number: 10189836.9
(22) Date of filing: 03.11.2010
(51) Int. Cl.: F24F 11/00, H04L 12/413

(54) **Air conditioner and communication method thereof**

(30) Priority: 24.11.2009 KR 20090113911
(71) Applicant: Samsung Electronics Co., Ltd., Suwon-si, Gyeonggi-do 506-762 (KR)
(72) Inventor: Jo, Su Ho, Gyeonggi-do (KR); Myoung, Kwan Joo, Gyeonggi-do (KR); Ryu, O Do, Gyeonggi-do (KR)
(74) Representative: Grünecker, Kinkeldey, Stockmair & Schwanhäusser Anwaltssozietät

(57) **Abstract**

An air conditioner in which a Carrier Sensing Multiple Access/Collision Avoidance (CSMA/CA) algorithm is provided on a bidirectional RS-485 communication line, and a communication method thereof. The air conditioner includes an RS-485 communication module to transmit and receive data in an RS-485 communication mode, and a microcomputer to determine presence or absence of data on a communication line when data to be transmitted is generated, occupy the communication line if no data is present on the communication line, and then transmit the generated data to the communication line.

## Description

### BACKGROUND

### 1. Field

Embodiments relate to an air conditioner in which data communication is performed between one or more outdoor units and a plurality of indoor units, and a communication method thereof.

### 2. Description of the Related Art

An air conditioner is an apparatus that is used to cool or heat a room. In the air conditioner, a refrigerant is circulated between an indoor unit and an outdoor unit, and a cooling or heating operation is performed based on characteristics that the refrigerant absorbs ambient heat when evaporated and discharges the heat when liquefied.

An air conditioner generally has one outdoor unit and one indoor unit connected to the outdoor unit. However, recently, users have increasingly demanded a multi-system air conditioner in which a plurality of indoor units with various shapes and volumes are connected to one or more outdoor units to perform a cooling or heating operation in a place having a number of divided spaces, such as a school or company.

In general, an RS-485 communication mode, which needs a smaller number of lines than that in a bidirectional communication mode and is appropriate for a multi-communication system, is widely used between an outdoor unit and an indoor unit.

### SUMMARY

Therefore, it is an aspect to provide an air conditioner in which a Carrier Sensing Multiple Access/Collision Avoidance (CSMA/CA) algorithm is provided on a bidirectional RS-485 communication line, and a communication method thereof.

Additional aspects will be set forth in part in the description which follows and, in part, will be apparent from the description, or may be learned by practice of the invention.

In accordance with one aspect, an air conditioner in which data communication is performed between one or more outdoor units and a plurality of indoor units includes an RS-485 communication module to transmit data in an RS-485 communication mode, and a microcomputer to determine presence or absence of data on a communication line through an external interrupt terminal for a predetermined time when data to be transmitted is generated, and transmit the generated data to the communication line through the RS-485 communication module if no data is present on the communication line.

The external interrupt terminal may be connected to a reception terminal of the microcomputer to detect data on the communication line.

The microcomputer may occupy the communication line if no data is present on the communication line, and then transmit the generated data to the communication line.

The microcomputer may transmit occupancy data to the communication line to occupy the communication line.

The occupancy data may have high and low states alternating at random.

The microcomputer may transmit hold data to make a distinction between the occupancy data and the data to be transmitted.

The hold data may be transmitted to the communication line for a certain time under the condition of assuming a high state.

The microcomputer may transmit a transmission enable signal to the RS-485 communication module if no data is present on the communication line when the data to be transmitted is generated.

In accordance with another aspect, a communication method of an air conditioner in which data communication is performed between one or more outdoor units and a plurality of indoor units includes determining whether data is present on a communication line, if data to be transmitted is generated, and transmitting the generated data to the communication line if it is determined that no data is present on the communication line.

The transmitting may include occupying the communication line if it is determined that no data is present on the communication line, and then transmitting the generated data to the communication line.

The occupying may include transmitting occupancy data to the communication line to occupy the communication line.

The occupancy data may have high and low states alternating at random.

The transmitting may further include transmitting hold data to make a distinction between the occupancy data and the data to be transmitted.

The hold data may be transmitted to the communication line for a certain time under the condition of assuming a high state.

The determining may include determining presence or absence of data on the communication line for a predetermined time if the data to be transmitted is generated.

In accordance with another aspect, an air conditioner in which data communication is performed between one or more outdoor units and a plurality of indoor units includes an RS-485 communication module to transmit data in an RS-485 communication mode, and a microcomputer to determine presence or absence of data on a communication line when data to be transmitted is generated, and transmit the generated data to the communication line through the RS-485 communication module if no data is present on the communication line.

The microcomputer may determine presence or absence of data on the communication line through an external interrupt terminal, the external interrupt terminal being connected to a reception terminal of the microcomputer.

### BRIEF DESCRIPTION OF THE DRAWINGS

These and/or other aspects will become apparent and more readily appreciated from the following description of the embodiments, taken in conjunction with the accompanying drawings of which:
FIG. 1 is a schematic block diagram showing the overall configuration of an air conditioner according to an embodiment;
FIG. 2 is a block diagram of a data communication unit of an air conditioner according to an embodiment;
FIG. 3 is a timing diagram illustrating a Carrier Sensing Multiple Access/Collision Avoidance (CSMA/CA) algorithm provided in an air conditioner according to an embodiment;
FIG. 4A is a view illustrating data detection timing when a communication line is monitored through a reception terminal of a microcomputer according to an embodiment;
FIG. 4B is a timing diagram illustrating erroneous data detection timing when a communication line is monitored through a reception terminal of a microcomputer according to an embodiment;
FIG. 5A is a view illustrating data detection timing when a communication line is monitored through an external interrupt terminal connected to a reception terminal of a microcomputer according to an embodiment;
FIG. 5B is a timing diagram illustrating data detection timing when a communication line is monitored through an interrupt terminal of a microcomputer according to an embodiment;
FIGS. 6A to 6C are timing diagrams illustrating data transmission of a microcomputer according to an embodiment;
FIG. 7 is a flow chart illustrating a method for communication using a Carrier Sensing Multiple Access/Collision Avoidance (CSMA/CA) algorithm when data is generated in an air conditioner according to an embodiment; and
FIG. 8 is a flow chart illustrating data transmission of a microcomputer according to an embodiment.

### DETAILED DESCRIPTION

Reference will now be made in detail to the embodiments, examples of which are illustrated in the accompanying drawings, wherein like reference numerals refer to like elements throughout.

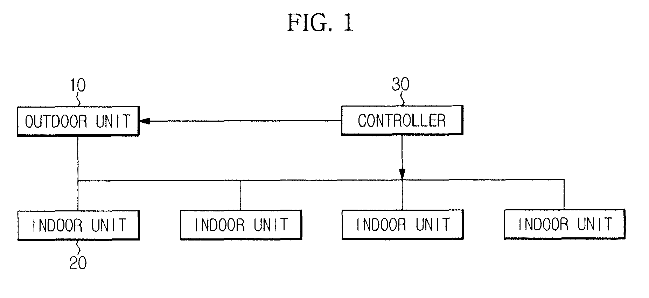

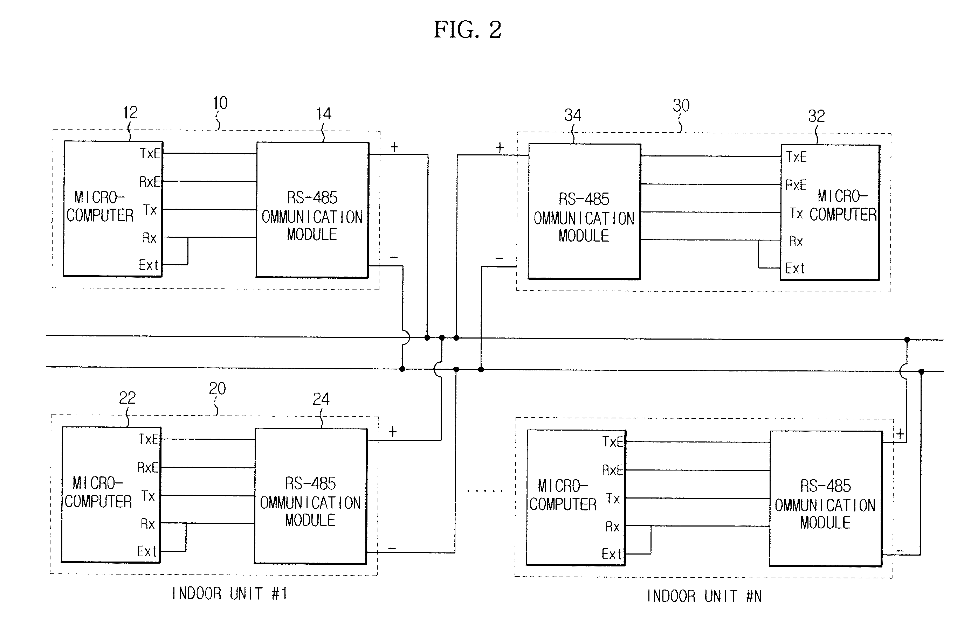

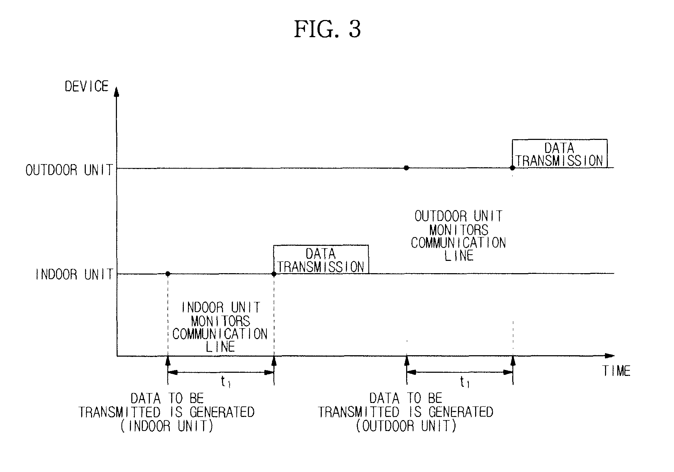

FIG. 1 is a schematic block diagram showing the overall configuration of an air conditioner according to an embodiment, FIG. 2 is a block diagram of a data communication unit of an air conditioner according to an embodiment, and FIG. 3 is a timing diagram illustrating a Carrier Sensing Multiple Access/Collision Avoidance (CSMA/CA) algorithm provided in an air conditioner according to an embodiment.

As shown in FIG. 1, an air conditioner includes one or more outdoor units 10, a plurality of indoor units 20, and a controller 30 to control the outdoor units 10 and indoor units 20. The controller 30 functions to control the outdoor units 10 and indoor units 20 connected thereto, so that a system manager may centrally control the air conditioner by operating the controller 30.

As shown in FIG. 2, each outdoor unit 10, each indoor unit 20 and the controller 30 each include a microcomputer 12, 22 or 32 to control the entire operation of a corresponding one of each outdoor unit 10, each indoor unit 20 and the controller 30, and an RS-485 communication module 14, 24 or 34 to transmit and receive data in an RS-485 communication mode.

The microcomputer 12, 22 or 32 controls transmission and reception of RS-485 communication. For data transmission, the microcomputer 12, 22 or 32 delivers a transmission enable signal and transmission data to the RS-485 communication module 14, 24 or 34. For data reception, the microcomputer 12, 22 or 32 delivers a reception enable signal to the RS-485 communication module 14, 24 or 34 and receives data transmitted from the RS-485 communication module 14, 24 or 34. On the other hand, the RS-485 communication mode, which is a communication protocol for a multi-point communication line, is one of interface protocols for serial transmission.

The microcomputer 12, 22 or 32 transmits and receives data using a Carrier Sensing Multiple Access/Collision Avoidance (CSMA/CA) algorithm provided to the RS-485 communication mode. The CSMA/CA algorithm is a technology that, when data to be transmitted is generated in a device, determines whether a network currently connected to the device is in use (carrier sense), transmits a collision avoidance signal for data transmission to each node if the network is not in use, and transmits the data at a certain time after transmitting the collision avoidance signal. For example, as shown in FIG. 3, when data to be transmitted is generated in the indoor unit 20 or outdoor unit 10, the microcomputer monitors a communication line for a predetermined time t1 to determine whether data transmission is being made on the communication line, and transmits the data if it is determined that no data is present on the communication line for the predetermined time t1.

Hereinafter, a detailed description will be given of the operation of the air conditioner to, when data to be transmitted is generated in the indoor unit 20, transmit the data using the CSMA/CA algorithm. This description is similarly applied to the outdoor unit 10 and the controller 30. When data to be transmitted is generated, the microcomputer 22 monitors a communication line for a predetermined time. If it is determined that no data is present on the communication line for the predetermined time, the microcomputer 22 transmits occupancy data. The occupancy data is data that is transmitted to occupy the communication line, which has high and low states alternating at random.

After transmitting the occupancy data for occupancy of the communication line, the microcomputer 22 transmits hold data. The hold data is data that is transmitted to the communication line to make a distinction between the occupancy data and the data to be actually transmitted. This hold data is transmitted to the communication line for a certain time under the condition of assuming a high state.

After transmitting the hold data, the microcomputer 22 transmits the data to be actually transmitted.

The RS-485 communication module 24 transmits and receives data in the RS-485 communication mode. For data transmission, the RS-485 communication module 24 enters a transmission enable state in response to a transmission enable signal from the microcomputer 22 and outputs data received from the microcomputer 22 to the communication line according to a sign. For data reception, the RS-485 communication module 24 enters a reception enable state in response to a reception enable signal from the microcomputer 22, restores a signal inputted from the communication line to original data and delivers the restored data to the microcomputer 22. On the other hand, in an aspect of the present invention, the RS-485 communication module 24 may always be in the reception enable state, so that it may receive data in real time.

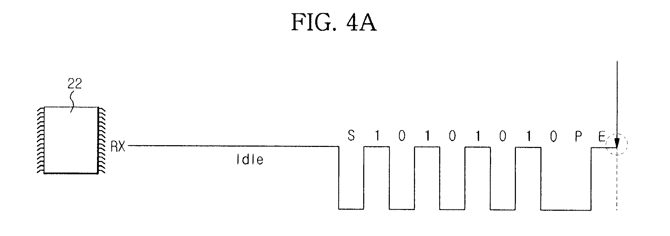

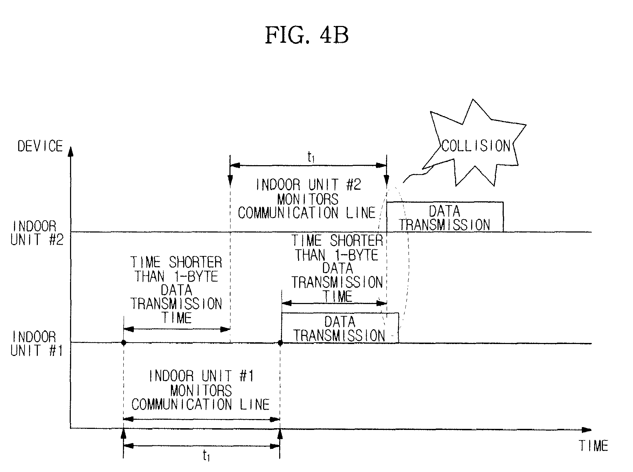

FIG. 4A is a view illustrating data detection timing when a communication line is monitored through a reception terminal Rx of a microcomputer according to an embodiment, and FIG. 4B is a timing diagram illustrating erroneous data detection timing when a communication line is monitored through a reception terminal Rx of a microcomputer according to an embodiment.

When data to be transmitted is generated, the microcomputer 22 monitors a communication line for a predetermined time. The reception terminal Rx of the microcomputer 22 recognizes data on a 1-byte basis, as shown in FIG. 4A. For this reason, when detecting data on the communication line, the microcomputer 22 cannot monitor external data in units shorter than 1 byte. That is, because the reception terminal Rx of the microcomputer 22 recognizes data on a 1-byte basis, the microcomputer 22, when detecting data on the communication line through the reception terminal Rx, can recognize the data on the communication line only in the case where all bits of a packet (including a start bit S, a parity bit P and an end bit E) for transmission of 1-byte data are transmitted. In this case, a collision may occur because the microcomputer 22 cannot monitor external data of a unit shorter than 1 byte.

As shown in FIG. 4B, when data of an indoor unit #1 to be transmitted is generated, the indoor unit #1 monitors a communication line for a predetermined time t1 to determine whether data is present on the communication line, and transmits the data thereof if it is determined that no data is present on the communication line for the predetermined time t1. Notably, provided that data of an indoor unit #2 is generated within a time shorter than a 1-byte data transmission time after the data of the indoor unit #1 is generated, the data of the indoor unit #1 and the data of the indoor unit #2 will collide. In detail, if it is determined that no data is present on the communication line for the predetermined time t1 after the data of the indoor unit #1 to be transmitted is generated, the indoor unit #1 transmits the data thereof. The indoor unit #2 detects data on the communication line for the predetermined time t1 after the data of the indoor unit #2 to be transmitted is generated. Because all bits of a packet corresponding to 1 byte among the data transmitted from the indoor unit #1 are not transmitted to the reception terminal Rx of the microcomputer 22 of the indoor unit #2 at a data detection completion time, the indoor unit #2 determines that no data is present on the communication line, and transmits the data thereof. As a result, the data transmitted from the indoor unit #1 and the data transmitted from the indoor unit #2 collide on the communication line.

On the other hand, in an aspect, the above-stated data collision may be avoided by connecting an external interrupt terminal ExT to the reception terminal Rx of the microcomputer 22, the method of which will hereinafter be described in detail.

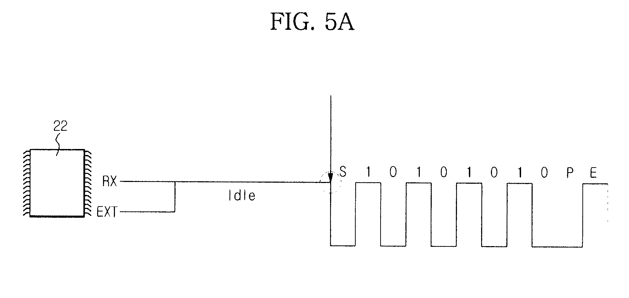

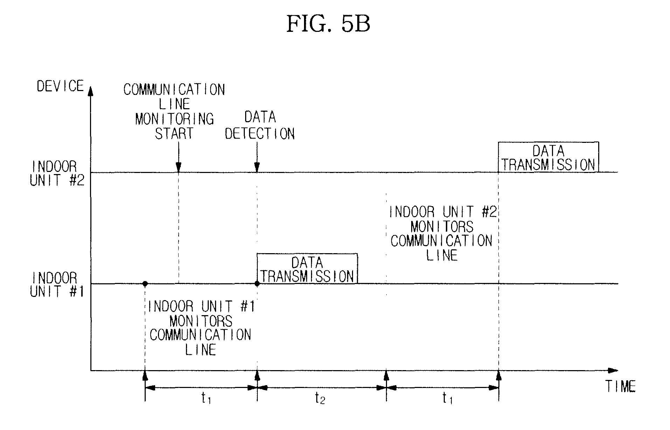

FIG. 5A is a view illustrating data detection timing when a communication line is monitored through an external interrupt terminal ExT connected to a reception terminal Rx of a microcomputer according to an embodiment of the present invention, and FIG. 5B is a timing diagram illustrating data detection timing when a communication line is monitored through an interrupt terminal ExT of a microcomputer according to an embodiment.

As shown in FIG. 5A, the external interrupt terminal ExT of the microcomputer 22 can detect a high or low variation of a signal. As a result, provided that the interrupt terminal ExT is connected to the reception terminal Rx of the microcomputer 22, the microcomputer 22 will be able to detect data on a communication line by means of a high or low variation, not on a 1-byte basis.

As shown in FIG. 5B, when data of an indoor unit #1 to be transmitted is generated, the indoor unit #1 monitors a communication line for a predetermined time t1 to determine whether data is present on the communication line, and transmits the data thereof if it is determined that no data is present on the communication line for the predetermined time t1. Notably, even though data of an indoor unit #2 to be transmitted is generated within a time shorter than a 1-byte data transmission time after the data of the indoor unit #1 to be transmitted is generated, the data of the indoor unit #1 and the data of the indoor unit #2 can be prevented from colliding, because the indoor unit #2 can detect data on the communication line on a bit basis. In detail, if it is determined that no data is present on the communication line for the predetermined time t1 after the data of the indoor unit #1 to be transmitted is generated, the indoor unit #1 transmits the data thereof. The indoor unit #2 detects data on the communication line for the predetermined time t1 after the data of the indoor unit #2 to be transmitted is generated and, before the data detection is completed, detects the data transmitted from the indoor unit #1 to the communication line. If data on the communication line is detected, the indoor unit #2 does not transmit the data thereof and, after the lapse of a predetermined time t2, again determines whether data is present on the communication line. If no data is detected for the predetermined time t1, the indoor unit #2 transmits the data thereof.

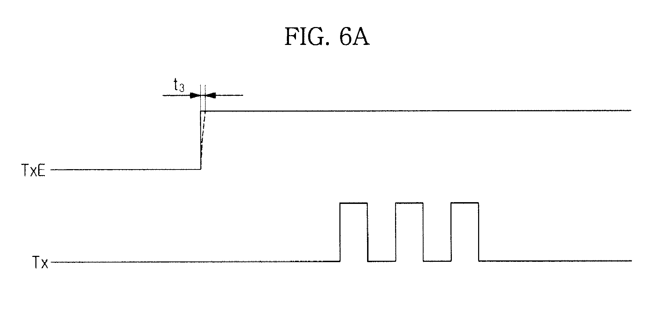

FIGS. 6A to 6C are timing diagrams illustrating data transmission of a microcomputer according to an embodiment.

As shown in FIG. 6A, for data transmission, the microcomputer 22 transmits a transmission enable signal (outputted from a terminal TxE) to the RS-485 communication module 24. At the time that the transmission enable signal is made active, the RS-485 communication module 24 switches to a transmission enable state (after a time t3). On the other hand, provided that the microcomputer 22 transmits data to the RS-485 communication module 24 through a transmission terminal Tx thereof before the RS-485 communication module 24 switches to the transmission enable state, the data will be unable to be transmitted to a communication line. For this reason, the microcomputer 22 has to transmit data after the RS-485 communication module 24 switches to the transmission enable state (after t3). However, the time t3 in which the RS-485 communication module 24 switches to the transmission enable state is variable because it varies with the type or state of a device. Also, provided that actual data is transmitted after the lapse of a sufficient time in which the RS-485 communication module 24 can switch to the transmission enable state, a communication line non-occupancy period in which the communication line cannot be occupied will become longer than the transmission enable state switching time t3, resulting in a data collision. For example, if, for the communication line non-occupancy period, a different indoor unit generates data thereof, determines whether data is present on the communication line, determines that no data is present on the communication line and thus transmits the data thereof, a data collision occurs.

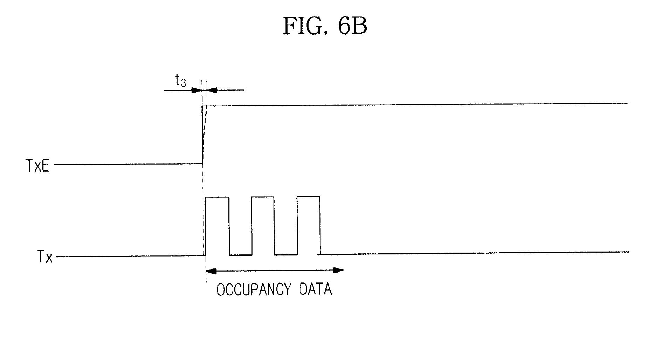

To solve this, as shown in FIG. 6B, the microcomputer 22 outputs occupancy data within a shortest time after transmitting the transmission enable signal. The occupancy data includes no information, and is simply data that is transmitted to occupy the communication line. The occupancy data has such a form that 0 and 1 (low and high states) alternate at random. By transmitting the occupancy data in the above manner, the occupancy data is outputted to the communication line immediately after the transmission enable state switching time t3 elapses, so that the communication line can be rapidly occupied.

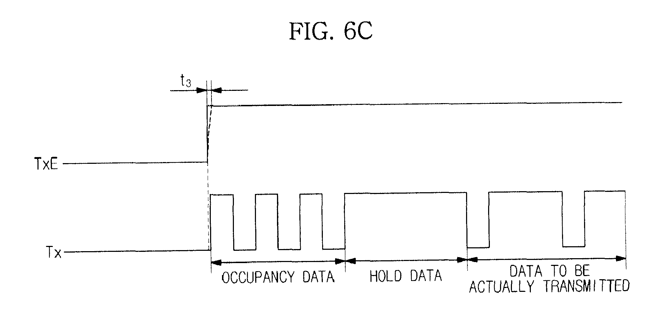

As shown in FIG. 6C, the microcomputer 22 transmits hold data after transmitting the occupancy data while the RS-485 communication module 24 switches to the transmission enable state. The hold data is data that is transmitted to the communication line to make a distinction between the occupancy data and the data to be actually transmitted. This hold data is transmitted to the communication line for a certain time under the condition of assuming a high state.

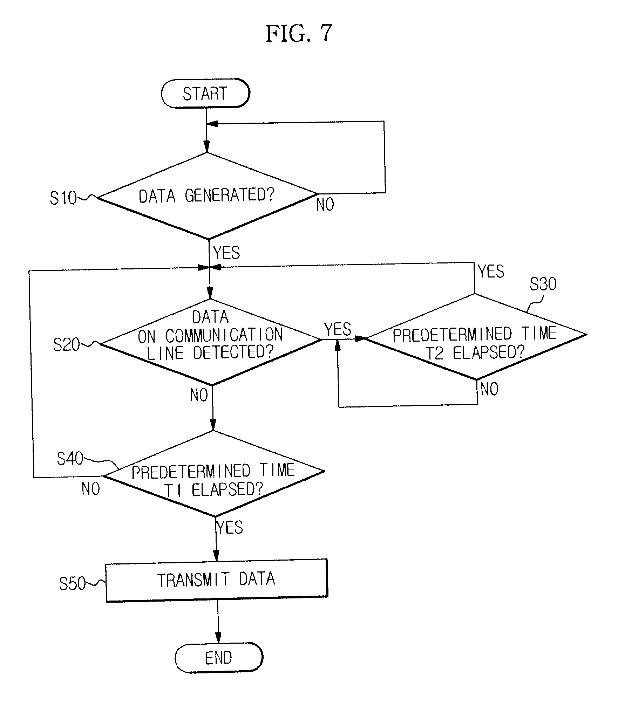

FIG. 7 is a flow chart illustrating a method for communication using a Carrier Sensing Multiple Access/Collision Avoidance (CSMA/CA) algorithm when data is generated in an air conditioner according to an embodiment.

As shown in FIG. 7, the microcomputer 22 determines whether data thereof is generated (S10) and, if the data is generated, detects data on a communication line (S20). Because the interrupt terminal ExT is connected to the reception terminal Rx of the microcomputer 22, the microcomputer 22 can detect data on the communication line by means of high and low state variations of a signal.

Upon determining that data is present on the communication line, the microcomputer 22 does not transmit the data thereof and waits for a predetermined time t2 (S30). When the predetermined time t2 has elapsed, the microcomputer 22 again determines whether data is present on the communication line (S20).

On the other hand, if it is determined that no data is present on the communication line, the microcomputer 22 determines whether a predetermined time t1 has elapsed (S40). In the case where it is determined that the predetermined time t1 has not elapsed, the microcomputer 22 continues to detect data on the communication line (S20). That is, the microcomputer 22 continuously detects data on the communication line for the predetermined time t1.

Then, if it is determined that no data is present on the communication line for the predetermined time t1 after the data generation, the microcomputer 22 transmits the data thereof (S50).

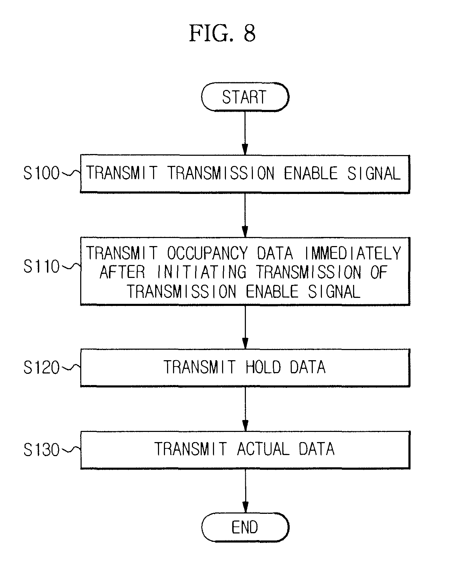

FIG. 8 is a flow chart illustrating data transmission of a microcomputer according to an embodiment.

As shown in FIG. 8, for data transmission, the microcomputer 22 transmits a transmission enable signal to the RS-485 communication module 24. After receiving the transmission enable signal, the RS-485 communication module 24 switches to a transmission enable state in which it can transmit data (S100).

Then, the microcomputer 22 transmits occupancy data to a communication line within a shortest time after initiating the transmission of the transmission enable signal to the RS-485 communication module 24 (S110). The occupancy data is data that is transmitted to occupy the communication line immediately after the RS-485 communication module 24 switches to the transmission enable state.

Then, the microcomputer 22 transmits hold data after transmitting the occupancy data (S120). The hold data is data that is transmitted to the communication line to make a distinction between the occupancy data and the data to be actually transmitted. This hold data is transmitted to the communication line for a certain time under the condition of assuming a high state.

Thereafter, the microcomputer 22 transmits the actual data (S130).

As is apparent from the above description, according to an embodiment, a CSMA/CA algorithm is provided to an RS-485 communication mode, so that information of respective devices of an air conditioner may be efficiently shared.

Although a few embodiments have been shown and described, it would be appreciated by those skilled in the art that changes may be made in these embodiments without departing from the principles and spirit of the invention, the scope of which is defined in the claims and their equivalents.

## Claims

1. An air conditioner in which data communication is performed between one or more outdoor units and a plurality of indoor units, the air conditioner comprising:
an RS-485 communication module to transmit data in an RS-485 communication mode; and
a microcomputer to determine presence or absence of data on a communication line through an external interrupt terminal for a predetermined time when data to be transmitted is generated, and transmit the generated data to the communication line through the RS-485 communication module if no data is present on the communication line.

2. The air conditioner according to claim 1, wherein the external interrupt terminal is connected to a reception terminal of the microcomputer to detect data on the communication line.

3. The air conditioner according to claim 1, wherein the microcomputer occupies the communication line if no data is present on the communication line, and then transmits the generated data to the communication line.

4. The air conditioner according to claim 3, wherein the microcomputer transmits occupancy data to the communication line to occupy the communication line.

5. The air conditioner according to claim 4, wherein the occupancy data has high and low states alternating at random.

6. The air conditioner according to claim 4, wherein the microcomputer transmits hold data to make a distinction between the occupancy data and the data to be transmitted.

7. The air conditioner according to claim 6, wherein the hold data is transmitted to the communication line for a certain time under the condition of assuming a high state.

8. The air conditioner according to claim 1, wherein the microcomputer transmits a transmission enable signal to the RS-485 communication module if no data is present on the communication line when the data to be transmitted is generated.

9. A communication method of an air conditioner in which data communication is performed between one or more outdoor units and a plurality of indoor units, the method comprising:
determining whether data is present on a communication line for a predetermined time, if data to be transmitted is generated; and
transmitting the generated data to the communication line if it is determined that no data is present on the communication line.

10. The communication method according to claim 9, wherein the transmitting comprises occupying the communication line if it is determined that no data is present on the communication line, and then transmitting the generated data to the communication line.

11. The communication method according to claim 10, wherein the occupying comprises transmitting occupancy data to the communication line to occupy the communication line.

12. The communication method according to claim 11, wherein the occupancy data has high and low states alternating at random.

13. The communication method according to claim 11, wherein the transmitting further comprises transmitting hold data to make a distinction between the occupancy data and the data to be transmitted.

14. The communication method according to claim 13, wherein the hold data is transmitted to the communication line for a certain time under the condition of assuming a high state.

15. A data communication system for an air conditioner having one or more outdoor units and a plurality of indoor units, the system comprising:
an RS-485 communication module to transmit data in an RS-485 communication mode; and
a microcomputer to determine presence or absence of data on a communication line when data to be transmitted is generated, and transmit the generated data to the communication line through the RS-485 communication module if no data is present on the communication line.
